# EUROPÄISCHE PATENTSCHRIFT

(11) **EP 0 993 800 B1**
(45) Veröffentlichungstag und Bekanntmachung des Hinweises auf die Patenterteilung: **17.12.2003**
(21) Anmeldenummer: 98119621.5
(22) Anmeldetag: 16.10.1998
(51) Int. Cl.: A47J 31/40

(54) **Kaffeemaschine**
Coffee machine
Machine à café

(43) Veröffentlichungstag der Anmeldung: 19.04.2000
(73) Patentinhaber: WMF WÜRTTEMBERGISCHE METALLWARENFABRIK AG, 73309 Geislingen/Steige (DE)
(72) Erfinder: Wittlinger, Gerhard, 73312 Geislingen/Stg. (DE)
(74) Vertreter: Grünecker, Kinkeldey, Stockmair & Schwanhäusser Anwaltssozietät

(56) Entgegenhaltungen:
- EP-A- 0 528 759
- EP-A- 0 629 371
- EP-A- 0 659 377

## Beschreibung

Die Erfindung bezieht sich auf eine Kaffeemaschine der im Oberbegriff von Anspruch erläuterten Art.

Eine derartige Kaffeemaschine ist aus der EP 629 371 A1 bekannt. Die bekannte Kaffeemaschine enthält eine Brüheinrichtung mit einem innerhalb einer Brühkammer verschiebbaren Kolben. Der Kolben ist napfförmig ausgebildet und enthält Angriffsflächen für ein Strömungsmittel, mit dessen Hilfe der Kolben in der Brühkammer axial bewegbar ist. Im napfförmigen Hohlraum des Kolbens ist ein inneres Teleskopelement vorgesehen, das relativ zum Kolben und relativ zu einer feststehenden Führung bewegbar ist. Zwischen der feststehenden Führung und dem inneren Teleskopelement sowie zwischen dem inneren Teleskopelement und dem Kolben sind jeweils Führungsstege vorgesehen, die den Kolben bei seiner Bewegung in der Brühkammer gegen Verkanten sichern. Zwischen dem inneren Teleskopelement und dem Kolben ist eine erste Feder vorgesehen, die sich beim Betätigen des Kolbens spannt. Zwischen dem inneren teleskopischen Element und der festen Führung ist eine weitere Feder vorgesehen, die sich beim Verschieben des inneren teleskopischen Elementes spannt. Wird der Strömungsmitteldruck nach der Bewegung des Kolbens entlastet, so drücken die Federn den Kolben und das innere Teleskopelement in ihrer Ausgangsposition zurück. Unter Druck stehendes Strömungsmittel zum Antrieb des Kolbens ist jedoch nicht in jeder Kaffeemaschine verfügbar.

Die EP 659 377 A1 beschreibt eine automatische Getränkemaschine mit einer durch eine Spindel bewegbaren Brühkammer und zwei darin angeordneten Kolben, wobei ein erster Kolben gehäusefest so angeordnet ist, dass sich die Brühkammer auf ihm axial verschieben kann, und wobei der zweite Kolben zusätzlich eine Eigenbewegung gestattet. Der zweite Kolben ist mit einer teleskopisch geteilten Kolbenstange versehen, die jedoch lediglich als Führung für die Kolbenbewegung dient. Der Antrieb des mit der teleskopischen Kolbenstange versehen Kolbens mit der erfolgt über den Spindeltrieb der Brühkammer, d. h. die Brühkammer nimmt den Kolben in ihrer Bewegung in der einen Richtung mit, während die Bewegung in die andere Richtung durch eine Rückholfeder bewirkt wird.

Die EP 528 759 A1 beschreibt eine Antriebsvorrichtung für eine Brüheinrichtung einer Kaffeemaschine, die nach einem ähnlichen System wie oben beschrieben arbeitet. Auch bei dieser Kaffeemaschine wird die Brühkammer über einen Spindeltrieb axial bewegt und sind zwei Kolben vorgesehen, von denen einer bei der Bewegung der Brühkammer mitgeschleppt wird. Um dies zu ermöglichen, stülpt sich eine Schürze des Kolbens teleskopartig über einen ortsfesten Stutzen, der als Führung für die Kolbenbewegung dient.

Eine aus der DE 33 16 157 C2 bekannte Kaffeemaschine enthält eine Brüheinrichtung, die einen in einer Brühkammer zum Komprimieren des Kaffeemehls und/oder Auspressen des fertigen Kaffeegetränks bewegbaren Kolben enthält. Der Kolben ist fest mit einer Kolbenstange verbunden, an der der Antrieb für die Kolbenbewegung angreift. Der Kolbenantrieb enthält einen Motor, zweckmäßigerweise einen Schrittmotor, der über ein Ritzel auf eine fest mit der Kolbenstange verbundenen Zahnstange wirkt. Nachteilig an dieser Ausgestaltung ist insbesondere die Tatsache, daß für diese Art des Antriebs die Kolbenstange sehr lang ausgebildet werden muß, was in Verbindung mit dem seitlich angreifenden Ritzel zu nicht unbeträchtlichen seitlichen Hebelkräften führen kann, denen durch eine relativ lange und kompakte Führung der Kolbenstange begegnet werden muß. Darüber hinaus bedingt die lange Kolbenstange auch eine entsprechend große Bauhöhe, was für viele Verwendungszwecke nachteilig ist.

Der Erfindung liegt somit die Aufgabe zugrunde, eine Kaffeemaschine bereitzustellen, die eine kompakte, robuste Antriebsgestaltung für den Kolben aufweist.

Die Aufgabe wird durch die im Anspruch 1 angegebenen Merkmale gelöst.

Durch die erfindungsgemäß vorgesehene Kolbenstange mit ihren teleskopartig zusammenschiebbaren Teleskopabschnitten, wird einerseits die Bauhöhe reduziert und andererseits vermieden, daß die Führung für die Kolbenstange zum Vermeiden von Schwingungen oder Hebelwirkungen entsprechend lang ausgebildet werden muß. Durch die zweistufige Ausbildung des Schraubengetriebes kann die Gesamtlänge der Kolbenstange weiter verringert werden. Haben die beiden Schraubengetriebe Steigungen in einander entgegengesetzten Richtungen, so kann die Geschwindigkeit der Kolbenbewegung stark erhöht werden, was besonders für kommerzielle Kaffeemaschinen mit dem erforderlichen hohen Getränkedurchsatz wichtig ist.

Durch die Ausgestaltung der Kolbenstange gemäß Anspruch 2 als Teleskopspindel wird ein äußerst robuster Antrieb für den Kolben geschaffen, bei dem keine seitlichen Hebelkräfte auf die Kolbenstange aufgebracht werden müssen.

Die Ausgestaltung nach Anspruch 3 erlaubt die Verwendung eines besonders einfachen Drehantriebs zur Bewegung des Kolbens.

Anspruch 4 beschreibt eine besonders bevorzugte Ausgestaltung der erfindungsgemäßen Kaffeemaschine, die eine besonders schnelle Bewegung des Kolbens gestattet, robust und äußerst kompakt ausgebildet ist, wobei die Kompaktheit der Konstruktion durch die Ausgestaltung des Verbindungselementes gemäß Anspruch 5 noch weiter gesteigert werden kann, da dadurch das Verbindungselement keine zusätzliche axiale Baulänge erfordert.

Durch die Ausgestaltung nach Anspruch 6 wird das Verbindungselement noch robuster.

Anspruch 7 beschreibt eine besonders bevorzugte Ausbildung einer drehfesten Lagerung für das Schraubengetriebe.

Anspruch 8 beschreibt eine besonders bevorzugte konstruktive Ausgestaltung des Kolbens, die eine genau axial ausgerichtete Lagerung der Teleskopabschnitte zueinander sicherstellt.

Ein Ausführungsbeispiel der Erfindung wird nachfolgend anhand der Zeichnungen näher erläutert. Es zeigen:
- Fig. 1: eine schematische Darstellung einer Kaffeemaschine mit den für die vorliegende Erfindung wesentlichsten Merkmalen,
- Fig. 2: eine schematische Darstellung einer Brüheinrichtung der Kaffeemaschine nach Fig. 1 mit voll ausgefahrenem Kolben,
- Fig. 3: eine schematische Darstellung der Brüheinrichtung der Kaffeemaschine nach Fig. 1 mit voll zurückgefahrenem Kolben, und
- Fig. 4: den Querschnitt IV-IV aus Fig. 3.

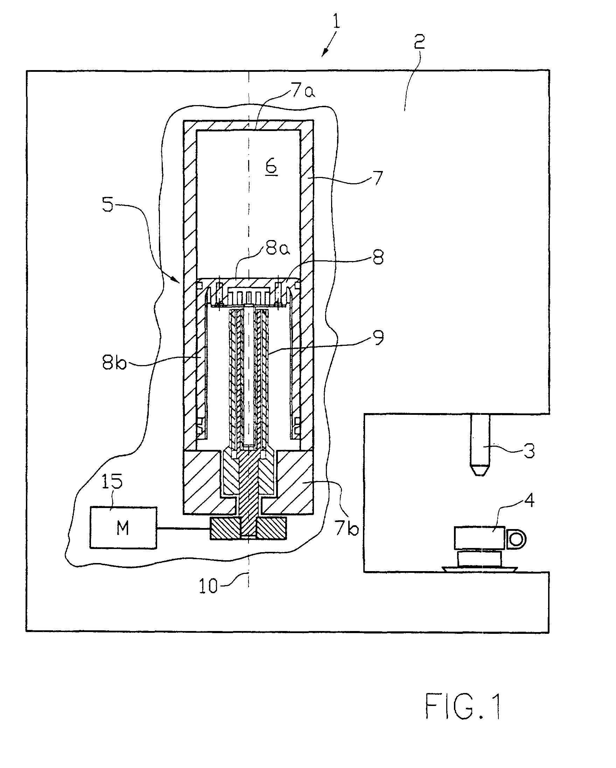

Fig. 1 zeigt in schematischer Darstellung eine Kaffemaschine 1 mit einem Gehäuse 2, aus dem ein Kaffeeauslauf 3 ausmündet, unter den ein Gefäß, dargestellt ist eine Tasse 4, zum Auffangen des Kaffeegetränkes gestellt werden kann.

Im Inneren des Gehäuses 2 ist außer den für den Betrieb einer Kaffeemaschine üblichen, nicht dargestellten Bauteilen, wie beispielsweise einem Heißwasserbereiter, einer Steuerung, einem Kaffeebehälter und/oder einem Kaffemahlwerk, eine Brüheinrichtung 5 untergebracht. Die Brüheinrichtung 5 enthält einen Brühkammer 6, die innerhalb eines Brühzylinders 7 untergebracht ist, der als Hohlzylinder mit rechteckigem Querschnitt ausgebildet ist und zumindest an einer Stirnseite 7a geschlossen ist. In die Brühkammer 6 münden die bekannten, hier nicht dargestellten, Zuführleitungen für Heißwasser und Kaffeemehl; aus der Brühkammer 6 mündet, hier ebenfalls nicht dargestellt, die Getränkeleitung zum Kaffeeauslaß 3. Die spezielle Konstruktion der Brüheinrichtung 5 ist nicht kritisch, bevorzugt wird jedoch eine Brüheinrichtung, wie sie in der EP 0 295 565 beschrieben ist, deren Inhalt hiermit durch Bezugnahme eingeschlossen wird.

Im Inneren des Brühzylinders 7 ist ein Kolben 8 in Axialrichtung auf- und abwärts bewegbar. Der Kolben 8 weist eine Kolbenfläche 8a auf, die den gleichen Querschnitt wie die Brühkammer 6 aufweist, d.h. rechteckig ist. Von der Kolbenfläche 8a erstrekken sich Seitenwände 8b nach unten und liegen ringsum an der Wandung des Brühzylinders 7 an. Auf diese Weise bildet der Kolben 8 einen auf einer Seite mit der Kolbenfläche 8a geschlossenen Hohlzylinder.

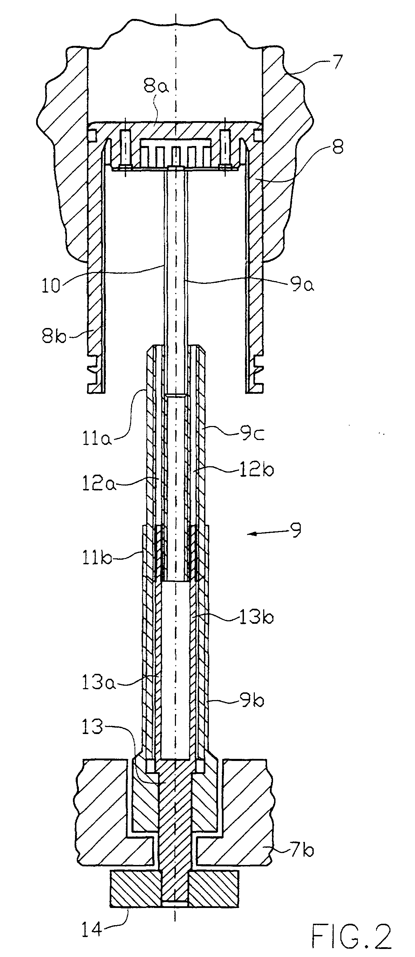

Der Kolben 8 ist mit Hilfe einer Kolbenstange 9 entlang der Mittelachse 10 auf- und abwärts verschiebbar. Die Kolbenstange 9 ist in Fig. 2 näher dargestellt. Die Kolbenstange 9 enthält drei Teleskopabschnitte 9a, 9b und 9c, wobei ein erster Teleskopabschnitt 9a fest mit dem Kolben 8 verbunden und zusammen mit ihm entlang der Achse 10 auf- und abwärts verschiebbar ist, wobei ein zweiter Teleskopabschnitt 9b drehfest und axial unverschiebbar in einer unteren Stirnfläche 7b des Brühzylinders 7 befestigt ist, und wobei ein dritter Teleskopabschnitt 9c zwischen dem ersten und dem zweiten Teleskopabschnitt 9a, 9b angeordnet und sowohl axial verschiebbar als auch verdrehbar ist.

Die Teleskopabschnitte 9a bis 9c sind über Schraubengetriebe miteinander verbunden, wobei ein erstes Schraubengetriebe durch ein Außengewinde am ersten Teleskopabschnitt 9a und ein Innengewinde am dritten Teleskopabschnitt 9c sowie ein zweites Schraubengetriebe 11b durch ein Innengewinde am zweiten Teleskopabschnitt 9b und ein Außengewinde am dritten Teleskopabschnitt 9c gebildet wird. Die Schraubengetriebe 11a und 11b weisen eine entgegengesetzte Richtung ihrer Steigung auf, wobei das Schraubengetriebe 11a bevorzugt als Linksgewinde und das Schraubengetriebe 11b bevorzugt als Rechtsgewinde ausgebildet ist.

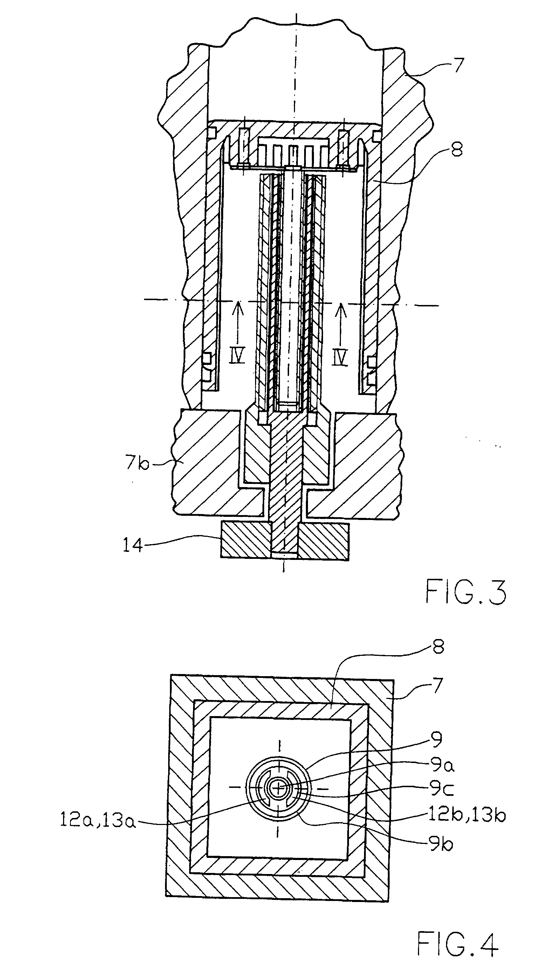

Wie auch in Verbindung mit Fig. 4 ersichtlich, enthält der dritte Teleskopabschnitt 9c zwei teilringförmige Ausnehmungen 12a und 12b, die sich über die gesamte axiale Länge des dritten Teleskopabschnittes 9c erstrecken, koaxial bezüglich der Mittelachse 10 gekrümmt, mit gleichem Abstand zur Mittelachse 10 und zu ihr symmetrisch diametral gegenüberliegend angeordnet sind. Die beiden Ausnehmungen 12a und 12b nehmen zwei korrespondierend geformte und angeordnete Vorsprünge 13a und 13b eines Verbindungselementes 13 im Form einer Hubspindelklaue derart auf, daß sich der dritte Teleskopabschnitt 9c auf den Vorsprüngen 13a und 13b entlang der Achse 10 axial bewegen kann. Die Vorsprünge 13a und 13b füllen die Ausnehmungen 12a bzw. 12b wieder vollständig aus, so daß sich der Teleskopabschnitt 9c nicht verdrehen kann.

Das Verbindungselement 13 ist drehbar, jedoch axial feststehend in der unteren Stirnwand 7b des Brühzylinders 7 gelagert und ist außerhalb des Brühzylinders 7 mit einem geeigneten Getriebeteil, beispielsweise einem Zahnrad 14 versehen, über das das Verbindungselement 13 durch einen Motor 15 (Fig. 1) um die Mittelachse 10 drehend angetrieben wird.

Beim Drehen des Verbindungselementes 13 in die eine Drehrichtung, die durch die Ausbildung der Steigungen der Schraubengetriebe 11a und 11b als Einziehrichtung festgelegt ist, wird, ausgehend von der voll ausgeschobenen Stellung gemäß Fig. 2, der dritte Teleskopabschnitt 9c über die in die Ausnehmung 12a, 12b eingreifenden Vorsprünge 13a und 13b in der Drehung mitgenommen. Da sowohl der erste Teleskopabschnitt 9a (wegen der nicht-rotationssymmetrischen Form des Kolbens 8 und des Brühzylinders 7) als auch der zweite Teleskopabschnitt 9b (wegen seiner Befestigung in der unteren Stirnwand 7b des Brühzylinders 7) drehfest gehalten sind, dreht sich nur der dritte Teleskopabschnitt 3c und schraubt sich einerseits tiefer in den zweiten Teleskopabschnitt 9b ein und zieht andererseits den ersten Teleskopabschnitt 9a in das Innere des dritten Teleskopabschnittes 9c ein, so daß der Kolben 8 mit einer aus beiden Bewegungen zusammengesetzten,resultierenden Geschwindigkeit zurückgezogen wird, bis er die voll eingezogene Stellung in Fig. 3 erreicht.

Wie Fig. 3 zeigt, sind die Längen der einzelnen Teleskopabschnitte 9a, b, c so bemessen, daß sie einerseits vollständig ineinander aufgenommen werden können und andererseits im wesentlichen vollständig vom hohlzylindrischen Kolben 8 überdeckt werden, wenn sie sich im voll eingeschobenen Zustand befinden. Auf diese Weise wird der größtmögliche Hub erreicht, der zweckmäßigerweise um mindestens das 1,5-fache größer als die eingezogene Grundlänge der Teleskopspindel sein sollte.

In Abwandlung des beschriebenen und gezeichneten Ausführungsbeispieles können die Teleskopabschnitte auch durch andere Getriebearten relativ zueinander bewegt werden. Wenn ein kürzerer Kolbenhub ausreicht, können auch nur zwei Teleskopabschnitte vorgesehen sein. Es ist weiterhin möglich, zum Einziehen und Herausschieben der Teleskopspindel einen Teleskopabschnitt direkt zu drehen und durch geeignete Anschläge sicherzustellen, daß alle anderen Teleskopabschnitte nacheinander ein- bzw. ausgeschraubt werden.

## Patentansprüche

1. Kaffeemaschine (1) mit einer Brüheinrichtung (5), die einen im Inneren einer Brühkammer (6) durch einen Kolbenantrieb (14, 15) verschiebbaren Kolben (8) mit einer Kolbenstange (9) enthält, wobei die Kolbenstange (9) Teleskopabschnitte (9a, 9b, 9c) enthält, die durch den Kolbenantrieb(14, 15) zum Verschieben des Kolbens (8) in Axialrichtung bewegbar sind, **dadurch gekennzeichnet, dass** die Kolbenstange (9) drei Teleskopabschnitte (9a, 9b, 9c) enthält, die über ein zweistufiges Schraubengetriebe (11a, 11b) miteinander verbunden sind, wobei das zweistufige Schraubengetriebe (11a, 11b) entgegengerichtete Steigungen in den beiden Gewindestufen aufweist und der Kolbenantrieb (14, 15) an der Kolbenstange (9) angreift.

2. Kaffeemaschine nach Anspruch 1, **dadurch gekennzeichnet, dass** die Kolbenstange (9) als Teleskopspindel ausgebildet ist.

3. Kaffeemaschine nach einem der Ansprüche 1 oder 2, **dadurch gekennzeichnet, dass** der Kolbenantrieb (14, 15) ein Drehantrieb ist, der über ein Verbindungselement (13) auf einen axial bewegbaren Teleskopabschnitt (9c) einwirkt.

4. Kaffeemaschine nach einem der Ansprüche 1 bis 3, **dadurch gekennzeichnet, dass** ein erster, drehfester aber axial bewegbarer Teleskopabschnitt (9a), ein zweiter feststehender und drehfester Teleskopabschnitt (9b) und ein dritter Teleskopabschnitt (9c) zwischen dem ersten und dem zweiten Teleskopabschnitt (9a, 9b) vorgesehen sind, wobei der dritte Teleskopabschnitt (9c) über ein erstes Schraubengetriebe (11a) mit dem ersten Teleskopabschnitt (9a) und ein zweites Schraubengetriebe (11b) mit einer dem ersten Schraubengetriebe (11a) entgegengerichteten Steigung mit dem zweiten Teleskopanschnitt (9b) verbunden ist, und wobei der Kolbenantrieb (14, 15) auf den dritten Teleskopabschnitt (9c) wirkt.

5. Kaffeemaschine nach den Ansprüchen 3 und 4, **dadurch gekennzeichnet, dass** das Verbindungselement (13) um eine mit der Achse (10) der Kolbenstange (9) fluchtende Drehachse drehbar ist, sich durch den zweiten Teleskopabschnitt (9b) erstreckt und mit dem dritten Teleskopabschnitt (9c) über einen in einer Axialführung (12a, 12b) drehfest aber axial bewegbar aufgenommenen Vorsprung (13a, 13b) verbunden ist.

6. Kaffeemaschine nach Anspruch 5, **dadurch gekennzeichnet, dass** am Verbindungselement (13) zwei Vorsprünge (13a, 13b) vorgesehen sind, die sich im Abstand zur Achse (10) diametral gegenüberliegen und in jeweils eine als Axialführung ausgebildete, korrespondierende Ausnehmung (12a, 12b) eingreifen.

7. Kaffeemaschine nach einem der Ansprüche 1 bis 6, **dadurch gekennzeichnet, dass** einer der Teleskopabschnitte (9a) drehfest mit dem Kolben (8) verbunden ist und der Kolben (8) durch eine nicht-rotationssymmetrische Form, insbesondere eine Rechteckform, in der Brühkammer (6) drehgesichert ist.

8. Kaffeemaschine nach einem der Ansprüche 1 bis 7, **dadurch gekennzeichnet, dass** der Kolben (8) als Hohlzylinder ausgebildet ist, dessen Seitenwand (8b) an einer Wandung der Brühkammer (6) anliegt und so bemessen ist, dass die Teleskopabschnitte (9a, 9b, 9c) in zusammengeschobenem Zustand im Kolben im Wesentlichen vollständig aufnehmbar sind.

## Claims

1. Coffee machine (1) with a brewing device (5) comprising a piston (8) with a piston rod (9) which can be displaced in the interior of a brewing chamber (6) by a piston drive (14, 15), the piston rod (9) comprising telescopic sections (9a, 9b, 9c) which can be moved in the axial direction by the piston drive (14, 15) in order to displace the piston (8), **characterised in that** the piston rod (9) comprises three telescopic sections (9a, 9b, 9c) connected together by means of a two-stage screw mechanism (11a, 11b), the two-stage screw mechanism (11a, 11b) having opposite pitches in the two thread stages and the piston drive (14, 15) acting on the piston rod (9).

2. Coffee machine according to claim 1, **characterised in that** the piston rod (9) is in the form of a telescopic spindle.

3. Coffee machine according to either of claims 1 or 2, **characterised in that** the piston drive (14, 15) is a rotary drive which acts on an axially movable telescopic section (9c) by means of a connecting element (13).

4. Coffee machine according to one of claims 1 to 3, **characterised by** a first, torsion-resistant, but axially movable telescopic section (9a), a second fixed, torsion-resistant telescopic section (9b) and a third telescopic section (9c) between the first and second telescopic sections (9a, 9b), the third telescopic section (9c) being connected by means of a first screw mechanism (11a) to the first telescopic section (9a) and by means of a second screw mechanism (11b) having the opposite pitch to the first screw mechanism (11a) to the second telescopic section (9b) and the piston drive (14, 15) acting on the third telescopic section (9c).

5. Coffee machine according to claims 3 and 4, **characterised in that** the connecting element (13) can be rotated about an axis of rotation aligned with the axis (10) of the piston rod (10), extends through the second telescopic section (9b) and is connected to the third telescopic section (9c) by means of a projection (13a, 13b) received in a torsion-resistant, but axially movable manner in an axial guide (12a, 12b).

6. Coffee machine according to claim 5, **characterised in that** two projections (13a, 13b) situated diametrically opposite one another at a distance from the axis (10) and each engaging in a corresponding recess (12a, 12b) designed as an axial guide are provided on the connecting element (13).

7. Coffee machine according to one of claims 1 to 6, **characterised in that** one of the telescopic sections (9a) is connected in a torsion-resistant manner to the piston (8) and the piston (8) is secured against rotation in the brewing chamber (6) as a result of its non-rotationally symmetrical shape, in particular a rectangular shape.

8. Coffee machine according to one of claims 1 to 7, **characterised in that** the piston (8) is in the form of a hollow cylinder, the side wall (8b) of which bears against a wall of the brewing chamber (6) and is dimensioned in such a manner that the telescopic sections (9a, 9b, 9c) can be received essentially completely in the piston in the telescoped state.

## Revendications

1. Machine à café (1) ayant un mélangeur (5), qui comprend, à l'intérieur d'un compartiment de mélange (6), un piston (8) ayant une tige de piston (9) qui peut être déplacé par un actionneur à piston (14, 15), la tige de piston (9) comportant des sections télescopiques (9a, 9b, 9c) qui peuvent être rendues mobiles selon une direction axiale par l'actionneur à piston (14, 15) pour déplacer le piston (8), **caractérisée par le fait que** la tige de piston (9) comprend trois sections télescopiques (9a, 9b, 9c) qui sont reliées entre elles par un système vis-écrou à deux niveaux (11a, 11b), dans lequel le système vis-écrou à deux niveaux (11a, 11b) présente des pas de vis en opposition dans les deux niveaux de filetage et dans lequel l'actionneur à piston (14, 15) s'accroche sur la tige de piston (9).

2. Machine à café selon la revendication 1, **caractérisée par le fait que** la tige de piston (9) est conçue comme une vis ascensionnelle.

3. Machine à café selon l'une des revendications 1 ou 2, **caractérisée par le fait que** l'actionneur à piston (14, 15) est un mécanisme d'entraînement rotatif, qui agit sur une section télescopique à déplacement axial (9c) via un élément de raccordement (13).

4. Machine à café selon l'une des revendications 1 à 3, **caractérisée en ce que** sont prévues une première section télescopique (9a) bloquée en rotation mais mobile axialement, une deuxième section télescopique (9b) fixe et bloquée en rotation et une troisième section télescopique (9c) entre la première et la deuxième section télescopique (9a, 9b), dans lesquelles la troisième section télescopique (9c) est raccordée à la première section télescopique (9a) via un premier système vis-écrou (11a) et raccordée à la deuxième section télescopique (9b) via un deuxième système vis-écrou (11b) au niveau de l'un des pas de vis opposés du premier système vis-écrou (11a), et dans lesquelles l'actionneur à piston (14, 15) agit sur la troisième section télescopique (9c).

5. Machine à café selon les revendications 3 et 4, **caractérisée par le fait que** l'élément de raccordement (13) peut tourner d'un axe de rotation aligné avec l'axe (10) de la tige de piston (9), s'étend à travers la deuxième section télescopique (9b) et est raccordée avec la troisième section télescopique (9c) via un tenon (13a, 13b) bloqué en rotation mais mobile axialement, hébergé dans un guidage axial (12a, 12b).

6. Machine à café selon la revendication 5, **caractérisée par le fait que** deux tenons (13a, 13b) sont présents au niveau de l'élément de raccordement (13), qu'ils sont placés à distance l'un de l'autre de manière diamétralement opposée par rapport à l'axe (10) et qu'ils s'accrochent chacun dans une encoche (12a, 12b) correspondante conçue en tant que guidage axial.

7. Machine à café selon l' une des revendications 1 à 6, **caractérisée par le fait que** l'une des sections télescopiques (9a) est raccordée par blocage en rotation au piston (8) et que le piston (8) est bloqué en rotation dans le compartiment de mélange (6) par une forme non symétrique en rotation, en particulier une forme rectangulaire.

8. Machine à café selon l'une des revendications 1 à 7, **caractérisée par le fait que** le piston (8) est conçu sous forme de cylindre creux dont la paroi latérale (8b) repose sur une paroi du compartiment de mélange (6) et est dimensionné de telle sorte que les sections télescopiques (9a, 9b, 9c) peuvent être essentiellement complètement intégrées dans le piston lorsqu'elles sont rassemblées.
